# EUROPÄISCHE PATENTSCHRIFT

(11) **EP 1 166 959 B1**
(45) Veröffentlichungstag und Bekanntmachung des Hinweises auf die Patenterteilung: **29.04.2009**
(21) Anmeldenummer: 01113151.3
(22) Anmeldetag: 30.05.2001
(51) Int. Cl.: B23Q 11/10, B23Q 1/00, B23B 29/04

(54) **Kühlmittelrohr und Werkzeughalter mit einem solchen Kühlmittelrohr**
Coolant pipe and tool holder with such a coolant pipe
Conduit pour liquide de refroidissement at porte-outil comprenant ce conduit

(30) Priorität: 23.06.2000 DE 10030844
(43) Veröffentlichungstag der Anmeldung: 02.01.2002
(73) Patentinhaber: Chiron-Werke GmbH & Co. KG, 78532 Tuttlingen (DE)
(72) Erfinder: Schweizer, Anton Richard, 78573 Wurmlingen (DE)
(74) Vertreter: Otten, Hajo

(56) Entgegenhaltungen:
- EP-A- 0 925 869
- DEGARMO EP, BLACK JT & KOHSER RA: "materials and processes in manufacturing (6th edition)" , MACMILLAN PUBLISHING COMPANY , NEW YORK XP002256947 * Seite 180, Zeile 1 - Zeile 5 *
- ANONYMOUS: "Tool holder adjustment screw with integral filter and seal" RESEARCH DISCLOSURE, KENNETH MASON PUBLICATIONS, HAMPSHIRE, GB, Bd. 386, Nr. 35, Juni 1996 (1996-06), XP007121124 ISSN: 0374-4353

## Beschreibung

Die vorliegende Erfindung betrifft ein Kühlmittelrohr für einen Halter für ein Werkzeug, der einen eine obere Öffnung aufweisenden Kegel-Hohlschaft zum Einspannen in eine Werkzeugaufnahme aufweist, wobei im Inneren des Kegel-Hohlschaftes das Kühlmittelrohr zur Zufuhr von Kühlmittel zu dem Werkzeug angeordnet wird, das Kühlmittelrohr eine der oberen Öffnung zugewandte Einlaßöffnung für Kühlmittel sowie einen oberen Rohrabschnitt aufweist, der bei in die Werkzeugaufnahme eingespanntem Halter in ein das Kühlmittelrohr dann zumindest teilweise übergreifendes Zufuhrrohr für Kühlmittel hineinragt, wobei eine von einem Einsatz gehaltene Abdeckung für die Einlaßöffnung vorgesehen ist, die verhindert, daß Späne in das Kühlmittelrohr hineingelangen.

Die Erfindung betrifft ferner einen Halter mit einem derartigen Kühlmittelrohr.

Ein derartiger Halter mit Kühlmittelrohr ist aus der EP 0 925 869 A2 bekannt.

Diese Halter, die auch als HSK-Werkzeughalter bezeichnet werden, bestehen im wesentlichen aus drei Abschnitten, nämlich einmal dem Kegel-Hohlschaft, an den sich nach unten ein verdickter Bund anschließt, an dem bspw. Greifernuten für automatische Werkzeugwechselvorrichtungen vorgesehen sind. An diesen Bund schließt sich nach unten ein Halteschaft an, an dem unterschiedliche Werkzeuge befestigt werden können. Da einige dieser Werkzeuge im Betrieb durch Kühlmittel gekühlt werden müssen, ist in dem Inneren des Kegel-Hohlschaftes eine zentrische, abgestufte Gewindebohrung vorgesehen, in die ein Kühlmittelrohr eingeschraubt werden kann. Dieses Kühlmittelrohr weist einen zentralen Kühlmittelkanal auf, durch den von der Werkzeugmaschine kommendes Kühlmittel zu dem jeweiligen Werkzeug gelangt.

Derartige HSK-Werkzeughalter sind genormt, sie können mit verschiedenen Werkzeugen bestückt und dann in eine Werkzeugaufnahme eingespannt werden, die in einer Spindel einer Werkzeugmaschine vorgesehen ist und eine zu dem Kegel-Hohlschaft komplementäre Öffnung aufweist.

Der Kegel-Hohlschaft ist mit einer oberen Öffnung versehen, durch die Zangensegmente und der Zugkegel eines Spannsystems in das Innere des Kegel-Hohlschaftes eingreifen können. Das Einspannen des Kegel-Hohlschaftes in die Aufnahme erfolgt derart, daß die Zangensegmente in ihrer Lösestellung zunächst nach innen geklappt sind und zusammen mit dem Zugkegel durch die Öffnung in den Kegel-Hohlschaft eingeschoben werden. Daraufhin wird der Zugkegel über seine Zugstange aus dem Kegel-Hohlschaft teilweise zurückgezogen, wobei er die Zangensegmente nach außen in ihre Spannstellung drückt, in der sie innen an dem Kegel-Hohlschaft anliegen und diesen drehfest mit der Spindel verspannen.

Beim Einwechseln des Halters in die Werkzeugaufnahme gelangt das Kühlmittelrohr in eine in dem als Zufuhrrohr wirkenden Zugkegel und in der Zugstange vorgesehene, zentrische Bohrung, durch die im Betrieb dann Kühlmittel zugeführt wird. Im vorderen Bereich dieser Bohrung ist ein Dichtring, vorzugsweise ein O-Ring vorgesehen, der in Anlage mit der zylindrischen äußeren Mantelfläche des Kühlmittelrohres gelangt.

Bei Werkzeugmaschinen gibt es im Betrieb immer wieder Probleme im Zusammenhang mit der Kühlmittelversorgung der Werkzeuge. Die Kühlmittelversorgung wird häufig durch verstopfte Kühlmittelkanäle in den Werkzeugen selbst unterbrochen oder aber dadurch nachteilig beeinflußt, daß die Abdichtung zwischen dem Kühlmittelrohr und der Kühlmittelzufuhr von seiten der Werkzeugmaschine undicht wird, so daß der Kühlmitteldruck abfällt und nicht mehr ausreicht, um das Kühlmittel in die kleinen Kühlmittelkanäle in den Werkzeugen hineinzudrücken. Eine Verringerung der Kühlmittelversorgung durch verstopfte Kühlmittelkanäle oder eine leckende Abdichtung führt jedoch häufig zu einer Überhitzung und damit zu einer Beschädigung des Werkzeuges, so daß eine häufige Reinigung des Halters, des Kühlmittelrohres sowie der Werkzeuge, mit denen die Halter bestückt sind, erforderlich ist. Darüber hinaus wird in relativ kurzen Abständen der Dichtring an der Werkzeugmaschine ausgewechselt. Unterbleiben diese zeit- und lohnintensiven Maßnahmen, so wird die Betriebssicherheit der mit den Haltern bestückten Werkzeugmaschinen verringert.

Bei dem Kühlmittelrohr aus der eingangs genannten EP 0 925 869 A2 wird dieses Problem dadurch beseitigt, daß eine Abdeckung für die Einlaßöffnung vorgesehen ist, die verhindert, daß Späne in das Kühlmittelrohr hineingelangen.

Diese Abdeckung ist als Sieb ausgebildet, das auf einer Schulter des das Kühlmittelrohr längs durchsetzenden Kühlmittelkanals aufliegt und durch einen Zackenring in dem oberen, erweiterten Durchmesser des Kühlmittelkanals gehalten ist.

Im Betrieb hat sich nun herausgestellt, daß infolge von Montagefehlern oder durch das pulsierende Kühlmittel der Zackenring herausfällt oder das Sieb sich querstellt, so daß die gewünschte Schutzwirkung verlorengeht.

Weiter wurde beobachtet, daß das Sieb sich auflöst, was ebenfalls zu einem Verlust der Schutzwirkung führt.

In der EP 0 925 869 A2 ist daher eine Weiterbildung beschrieben, in der an der Spitze des Kühlmittelrohres ein Einsatz angeordnet ist, in dem mehrere Siebe vorgesehen sind. Dieser Einsatz wird wiederum durch einen Zackenring in dem Kühlmittelkanal gehalten.

Durch eine Abfolge von feinen Sieben, die sich aus gröberen Sieben abstützen, soll verhindert werden, daß das feine Sieb in den Kühlmittelkanal hineingedrückt wird.

Es hat sich jedoch gezeigt, daß auch hier der Zackenring herausfällt oder infolge von Montageproblemen der Einsatz und/oder der Zackenring falsch eingebaut werden oder bereits beim Transport verlorengehen, so daß die gewünschte Schutzwirkung nicht erreicht wird.

Vor diesem Hintergrund liegt der vorliegenden Anmeldung die Aufgabe zugrunde, das eingangs genannte Kühlmittelrohr derart weiterzubilden, daß die oben genannten Nachteile vermieden werden. Insbesondere soll bei konstruktiv einfachem Aufbau die Betriebssicherheit einer Werkzeugmaschine verbessert werden, die mit einem eingangs genannten Halter mit Kühlmittelrohr bestückt ist.

Erfindungsgemäß wird diese Aufgabe bei dem eingangs erwähnten Halter sowie dem eingangs erwähnten Kühlmittelrohr dadurch gelöst, daß der Einsatz ein austauschbares Einsatzrohr ist, daß das Kühlmittelrohr von der Abdeckung bis zu dem Ende des Kühlmittelrohres durchsetzt, das von dessen Spitze abgelegen ist.

Die der Erfindung zugrundeliegende Aufgabe wird auf diese Weise vollkommen gelöst.

Durch das Einsatzrohr, das das Kühlmittelrohr auf seiner gesamten Länge durchsetzt, wird zwar die lichte Weite des Kühlmittelkanals verringert, so daß ursprünglich davon ausgegangen wurde, daß der auf die Abdeckung ausgeübte Druck vergrößert und damit die Gefahr einer Fehlfunktion erhöht wird, wider Erwarten hat sich jedoch herausgestellt, daß dies nicht der Fall ist. Es ergibt sich nämlich, daß durch das Einsatzrohr ein deutlich besserer Halt der Abdeckung erzielt werden kann, die jetzt z.B. zwischen dem oberen Ende des Kühlmittelrohres und dem Einsatzrohr eingeklemmt werden kann, so daß auf einen Zackenring verzichtet werden kann.

Es hat sich nämlich herausgestellt, daß der Zackenring, der im Stand der Technik zur Befestigung der Abdeckung verwendet wird, eine der Ursachen für sich lösende Abdeckungen ist. Der Zackenring kann sich nämlich nicht wie angenommen so in der Oberfläche des Kühlmittelrohres verklemmen, daß er dort sicher gehalten ist. Das Kühlmittelrohr ist nämlich aus gehärtetem Metall hergestellt, so daß der Zackenring in die gehärtete Oberfläche nicht eindringen kann.

Weil das Kühlmittelrohr jetzt durchgehend von einem Einsatzrohr durchsetzt ist, ist die lichte Weite des Kühlmittelkanales auf der ganzen Länge des Kühlmittelrohres verglichen mit dem Stand der Technik reduziert, was jedoch wider Erwarten ebenfalls nicht zu Problemen geführt hat.

Es hat sich nämlich herausgestellt, daß bei dem im Einsatz auftretenden Gegendruck von 70 bar die Fördermenge der Kühlmittelpumpe von 20 l/min noch durch das Kühlmittelrohr hindurchgeht, so daß für einen ausreichenden Kühlmittelfluß gesorgt wird. Wenn das Röhrchen jedoch ohne Gegendruck, also quasi im Leerlauf betrieben wird, wird die Fördermenge durch das zusätzlich vorgesehene Einsatzrohr deutlich verringert, was ursprünglich gegen die Verwendung eines solchen Einsatzrohres sprach. Es hat sich jedoch - wie gesagt - herausgestellt, daß die Querschnittsreduzierung des Kühlmittelkanales im Einsatz kein Problem darstellt.

In einer Weiterbildung ist es bevorzugt, wenn das Kühlmittelrohr an seiner Spitze einen nach innen vorspringenden Rand aufweist.

Bei dieser Maßnahme ist von Vorteil, daß die Abdeckung zwischen den vorspringenden Rand des Kühlmittelrohres sowie das Einsatzrohr eingeklemmt wird, so daß es dort sicher gehalten wird und sich nicht lösen kann. Darüber hinaus ist von Vorteil, daß die Abdeckung durch die Stirnfläche des Kühlmittelrohres gehalten wird, so daß sie eine sichere Unterstützung findet.

Ein weiterer Vorteil ist darin zu sehen, daß die Abdeckung jetzt sozusagen von hinten in das Kühlmittelrohr eingelegt werden muß, woraufhin dann das Einsatzrohr nachgeschoben wird. Auf diese Weise ist eine fehlerhafte Montage nicht mehr möglich, denn wenn die Abdeckung sich im Kühlmittelrohr verklemmt, kann das Einsatzrohr nicht eingeschoben werden, was wiederum bedeutet, daß das Kühlmittelrohr nicht am Werkzeughalter befestigt werden kann. Auf diese Weise wird eine Fehlmontage verhindert.

Andererseits ist es bevorzugt, wenn die Abdeckung an dem Einsatzrohr festgelegt ist.

Bei dieser Maßnahme ist von Vorteil, daß die Montage der Abdekkung an dem Einsatzrohr unabhängig ist von der Montage der Abdeckung an dem Kühlmittelrohr, letzteres erfolgt jetzt nämlich durch einfaches Einschieben des Einsatzrohres in das Kühlmittelrohr. An das Einsatzrohr sind völlig andere Anforderungen zu stellen als an das Kühlmittelrohr, so daß das Einsatzrohr so ausgelegt werden kann, daß die Abdeckung sicher an ihm befestigt werden kann.

Auch auf diese Weise werden also die Sicherheitsprobleme aus dem Stand der Technik beseitigt.

Allgemein ist es bevorzugt, wenn die Abdeckung zumindest ein Sieb umfaßt, wobei ferner vorzugsweise das Einsatzrohr einen zentrischen Kühlmittelkanal aufweist, dessen Innendurchmesser sich im Bereich der Einlaßöffnung unter Ausbildung einer Schulter stufenartig erweitert, wobei das Sieb auf der Schulter aufliegt.

Diese Maßnahme ist nicht nur konstruktiv von Vorteil, sie ermöglicht auch eine einfache Festlegung der Abdeckung, also des Siebes an dem Einsatzrohr. Das Sieb wird nämlich lediglich von vorne in das Einsatzrohr eingelegt und dort bspw. mit einem Zackenring gehalten.

Dabei ist es bevorzugt, wenn das Einsatzrohr aus einem weicheren Metall als das Kühlmittelrohr, vorzugsweise aus Messung hergestellt ist.

Hier ist von Vorteil, daß sich bspw. ein Zackenring deutlich leichter und fester in dem Kühlmittelkanal in dem Einsatzrohr verklemmen kann, als dies in dem Kühlmittelrohr selbst der Fall ist.

Dabei ist es jedoch weiter bevorzugt, wenn das Einsatzrohr an seiner Spitze umgebördelt ist und die Abdeckung zwischen der umgebördelten Spitze und der Schulter eingeklemmt ist.

Diese Maßnahme sorgt für einen noch besseren Sitz der Abdeckung in dem Einsatzrohr und verhindert darüber hinaus eine fehlerhafte Montage.

Die Abdeckung, also das Sieb wird jetzt nämlich von oben auf die Schulter in dem Einsatzrohr aufgelegt, woraufhin dann das obere Ende des Einsatzrohres umgebördelt wird. Durch dieses Umbördeln wird das Sieb sicher in dem Einsatzrohr gehalten.

Sollte es bei der Montage des Siebes an dem Einsatzrohr deshalb Probleme geben, weil das Sieb sich querstellt, so würde die Umbördelung nicht hinreichend möglich sein. Selbst wenn dieser Fehler bei der Fertigung des mit dem Sieb versehenen Einsatzrohres nicht auffällt, so wird er spätestens dann erkannt, wenn das Einsatzrohr in das Kühlmittelrohr eingeschoben wird und dort wegen der mangelhaften Umbördelung an seiner Spitze nicht vollständig aufgenommen werden kann.

Diese Maßnahme hat also mehrere Vorteile, zum einen ist ein konstruktiv einfacher Aufbau gewählt, der zum anderen auch noch fehlersicher ist, denn nur bei korrekt montiertem Sieb in dem Einsatzrohr läßt sich letzteres in das Kühlmittelrohr vollständig einschieben.

Allgemein ist es noch bevorzugt, wenn das Kühlmittelrohr an seinem unteren Ende einen Flansch aufweist, über den es mittels einer Überwurfmutter mit Außengewinde an dem Halter festgeschraubt ist.

Diese Maßnahme ist an sich bekannt, sie weist den Vorteil auf, daß das Kühlmittelrohr ausgetauscht werden kann. Damit ist es möglich, bei bestehenden Haltern das alte Kühlmittelrohr durch ein erfindungsgemäßes Kühlmittelrohr zu ersetzen.

Weiter ist es bevorzugt, wenn das Einsatzrohr an seinem von der Einlaßöffnung abgelegenen Ende einen Flansch aufweist, über den es zwischen den Flansch des Kühlmittelrohres und den Halter eingeklemmt ist.

Diese Maßnahme ist konstruktiv von Vorteil, denn sie ermöglicht ein sicheres Festlegen des Einsatzrohres, ohne daß weitere Montageschritte erforderlich sind. Bei dem Zusammenbau des erfindungsgemäßen Halters ist es nun lediglich erforderlich, von hinten in das Kühlmittelrohr das Einsatzrohr einzuschieben und dann das Kühlmittelrohr - wie üblich - mittels einer Überwurfmutter an dem Halter zu befestigen.

Weiter ist es noch bevorzugt, wenn auf dem Sieb ein weiteres Sieb mit geringerer Maschenweite aufliegt.

Diese Maßnahme ist an sich bekannt, sie sorgt dafür, daß außen, also dem Zufuhrrohr zugewandt, ein feineres Sieb liegt, das auch feinste Späne abhält, seinerseits aber durch ein gröberes Sieb unterstützt wird, so daß es sich auch bei stark pulsierendem Kühlmittel oder Zusetzung nicht nach innen durchbiegt.

Weitere Vorteile ergeben sich aus der Beschreibung und der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein Ausführungsbeispiel der Erfindung ist in der Zeichnung dargestellt und wird in der nachfolgenden Beschreibung näher erläutert. Es zeigen:
- Fig. 1: den neuen Halter mit neuem Kühlmittelrohr in ei- ner schematischen, teilweise geschnittenen Sei- tenansicht;
- Fig. 2: in einer schematischen Darstellung einen aus- schnittsweisen Längsschnitt durch den Bereich der Werkzeugaufnahme einer Spindel einer Werkzeugma- schine;
- Fig. 3: einen Längsschnitt durch das Kühlmittelrohr aus Fig. 1;

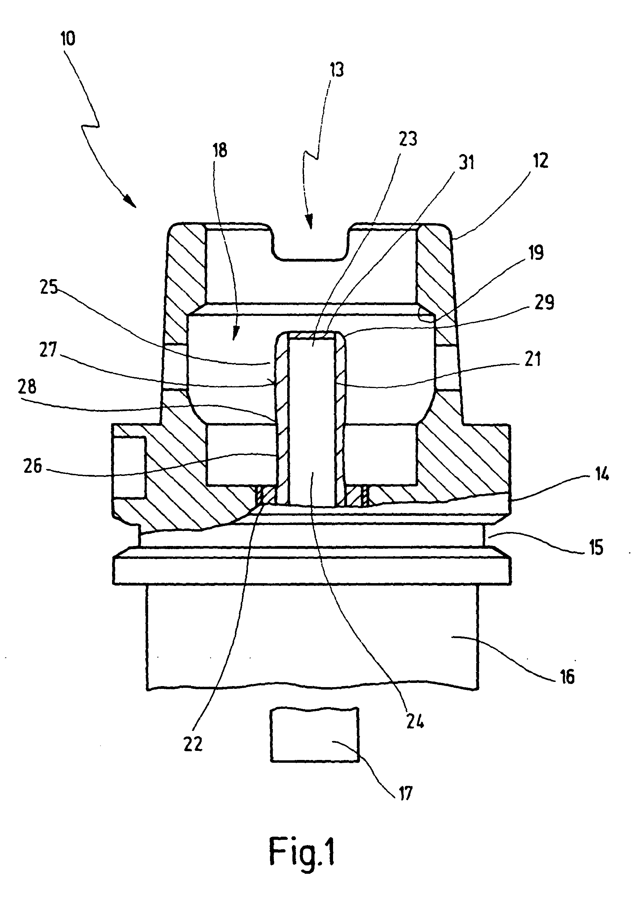

In Fig. 1 ist mit 10 ein Halter für ein nicht dargestelltes Werkzeug bezeichnet. Der Halter ist in Fig. 1 in einer schematischen, teilweise geschnittenen Seitenansicht dargestellt.

Der Halter 10 weist zunächst einen an sich bekannten Kegel-Hohlschaft 12 auf, in dem eine obere Öffnung 13 vorgesehen ist.

An den Kegel-Hohlschaft 12 schließt sich nach unten ein Bund 14 an, an dem eine außen umlaufende Greifernut 15 für automatische Werkzeugwechselvorrichtungen vorgesehen ist.

Unterhalb des Bundes 14 ist ein Halteschaft 16 angedeutet, an dem wahlweise Werkzeuge 17 befestigt werden können.

Der Kegel-Hohlschaft 12 weist in seinem Inneren 18 eine umlaufende Schulter 19 auf, die mit Zangensegmenten eines Spannsystemes zusammenwirkt, über das der insoweit bekannte Halter 10 in eine Werkzeugaufnahme in einer Spindel einer Werkzeugmaschine eingesetzt werden kann.

In dem Inneren 18 des Kegel-Hohlschaftes 12 ist in an sich noch bekannter Weise ein Kühlmittelrohr 21 angeordnet, das mittels einer Überwurfmutter 22 lösbar an dem Halter 10 befestigt ist. Das Kühlmittelrohr 21 weist einen in eine Einlaßöffnung 23 mündenden Kühlmittelkanal 24 auf, über den das jeweils an dem Halteschaft 16 befestigte Werkzeug 17 mit Kühlmittel versorgt wird, das in noch zu beschreibender Weise von der Werkzeugmaschine geliefert wird.

Das Kühlmittelrohr 21 weist an seinem oberen Ende einen oberen Rohrabschnitt 25 auf, an den sich von der Einlaßöffnung 23 abgelegen ein weiterer Rohrabschnitt 26 anschließt, dessen Außendurchmesser geringer ist als der Außendurchmesser des oberen Rohrabschnittes 25, dessen zylindrische Mantelfläche 27 unter Ausbildung eines konischen Übergangsbereiches 28 in den weiteren Rohrabschnitt 26 führt. Der Außendurchmesser an dem oberen Rohrabschnitt 25 beträgt z.B. 12 mm, während der Außendurchmesser an dem weiteren Rohrabschnitt 26 bei 11 mm liegt, also geringfügig weniger als 10 % kleiner ist als der Außendurchmesser des oberen Rohrabschnittes 25.

Von dem konischen Übergangsbereich 28 abgelegen weist der obere Rohrabschnitt 25 noch eine konische Spitze 29 auf, die sich zu der Einlaßöffnung 23 hin verjüngt.

Es ist zu erkennen, daß das Kühlmittelrohr 21 mit seiner Einlaßöffnung 23 in Richtung der oberen Öffnung 13 des Kegel-Hohlschaftes 12 weist. Hier ist weiter zu bemerken, daß der Halter 10 im Zusammenhang mit automatischen Werkzeugwechselvorrichtungen verwendet wird, die der Reihe nach Halter 10 zwischen einer Magazinstellung und einer Arbeitsstellung an der Spindel einer Werkzeugmaschine überführen. In der Magazinstellung befinden sich die Halter in köcherartigen Abdeckungen, so daß keine Späne auf den Kegel-Hohlschaft 12 bzw. in das Innere 18 des Kegel-Hohlschaftes 12 gelangen können. Während der Überführung der Halter 10 von der Magazinstellung in die Arbeitsstellung ist die obere Öffnung 13 jedoch ungeschützt, so daß von Teilen der Werkzeugmaschine herabfallende Späne auch in die Einlaßöffnung 23 gelangen können. Durch eine schematisch angedeutete Abdeckung 31 wird jedoch verhindert, daß derartige Späne in den Kühlmittelkanal 24 gelangen und schließlich die feineren Kühlmittelkanäle in dem nicht gezeigten Werkzeug so weit verstopfen, daß keine Kühlung des Werkzeuges mehr erfolgt.

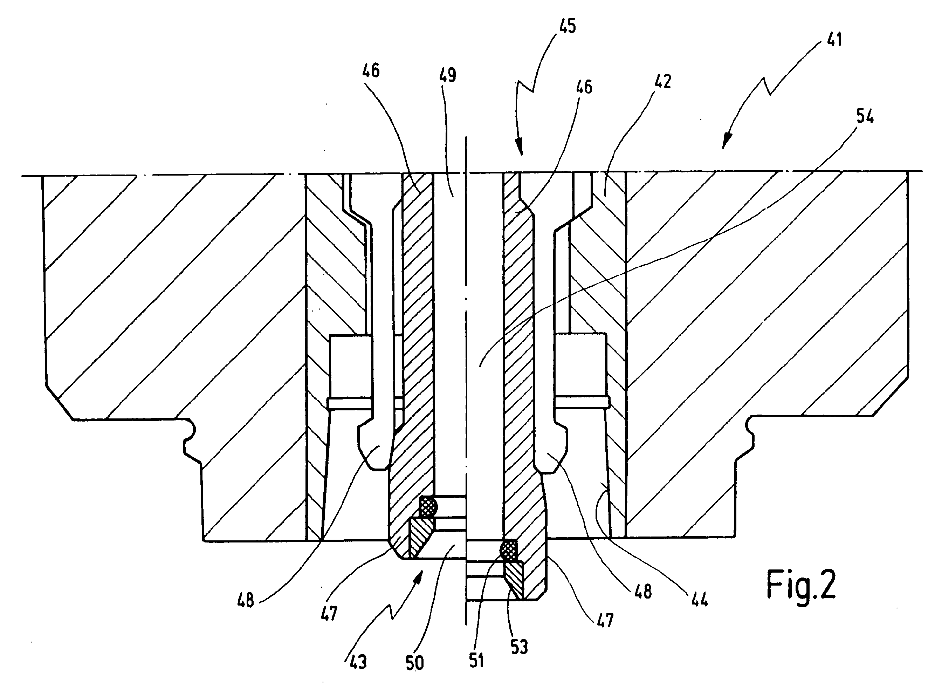

In Fig. 2 ist ausschnittsweise und sehr schematisch ein Teil einer Werkzeugmaschine 41 im Bereich ihrer Spindel 42 gezeigt. Die Spindel 41 weist eine Werkzeugaufnahme 43 auf, die eine konische Öffnung 44 umfaßt, deren Form komplementär zu der des Kegel-Hohlschaftes 12 ausgebildet ist. In Fig. 2 ist aus Gründen der Übersichtlichkeit auf die Darstellung des Kegel-Hohlschaftes verzichtet worden.

In der Spindel 42 ist ein Spannsystem 45 angeordnet, das in an sich bekannter Weise eine Zugstange 46 mit konischem Zugkegel 47 sowie Zangensegmente 48 umfaßt. In der rechten Hälfte der Fig. 2 ist das Spannsystem 45 in gelöstem Zustand und in der linken Hälfte in gespanntem Zustand gezeigt, in dem die Zugstange 46 sowie der Zugkegel 47 eingezogen sind, so daß das Zangensegment 48 nach außen gedrückt ist, wo es mit der Schulter 19 im Inneren 18 des Kegel-Hohlschaftes 12 (siehe Fig. 1) in Anlage gelangt.

In der Zugstange 46 sowie in dem Zugkegel 47 ist eine zentrische Bohrung 49 vorgesehen, über die Kühlmittel zu dem Kühlmittelrohr 21 in dem Halter 10 geführt wird. Die zentrische Bohrung 49 erweitert sich an ihrem unteren Ende 50 stufenartig und trägt dort einen Dichtring 51, der über einen Messingeinsatz 53 verschraubt ist. Auf diese Weise wird ein Zufuhrrohr 54 für Kühlmittel gebildet, in das das Kühlmittelrohr 21 hineinragt, wenn der Halter 10 in die Werkzeugaufnahme 43 eingesetzt ist.

Beim Einführen des Kegel-Hohlschaftes 12 in die Werkzeugaufnahme 43 gleitet der Dichtring 51, der vorzugsweise ein O-Ring ist, zunächst über die konische Spitze 29 auf die Mantelfläche 27 des oberen Rohrabschnittes 25. Beim weiteren Einschieben des Kegel-Hohlschaftes 12 in die Werkzeugaufnahme 43 wird der Dichtring 51 wieder von dem oberen Rohrabschnitt 25 heruntergeschoben und befindet sich nun zunächst im Bereich des weiteren Rohrabschnittes 26, wo er nicht in Anlage mit der Mantelfläche 27 ist.

In diesem Zustand des Einkuppelns/Einspannens des Halters 10 in die Werkzeugaufnahme 43 befindet sich das Spannsystem 45 in der in der rechten Hälfte von Fig. 2 gezeigten Stellung.

Die Spindel 42 führt jetzt eine Relativbewegung zu dem Halter 10 durch, der von der Werkzeugwechselvorrichtung drehbar gehalten wird. Zwischen der Spindel 42 und dem Halter 10 sind in den Zeichnungen aus Gründen der Übersichtlichkeit nicht dargestellte und an sich bekannte Nutensteine und Vertiefungen vorgesehen, die nur in einer bestimmten radialen Ausrichtung zwischen Spindel 42 und Halter 10 miteinander verrasten. Sobald dieses Verrasten erfolgt ist, der Halter 10 also in die Spindel 42 eingekuppelt wurde, wird das Spannsystem 45 angezogen. Dazu wird die Zugstange 46 zurückgezogen, so daß der Zugkegel 47 die Zangenelemente 48 nach außen drückt, wodurch der Kegel-Hohlschaft 12 noch geringfügig weiter in die konische Öffnung 44 hineingezogen und schließlich drehfest verspannt wird.

Während dieses Spannvorganges führt die Zugstange 46 einen größeren Hub durch, der dazu führt, daß der Dichtring 51 über den konischen Übergangsbereich 28 wieder auf die Mantelfläche 27 heraufgezogen wird, wo er für eine dichte Abdichtung sorgt, so daß durch die zentrische Bohrung 49 zugeführtes Kühlmittel nicht außen an dem Kühlmittelrohr 21 vorbeilaufen kann.

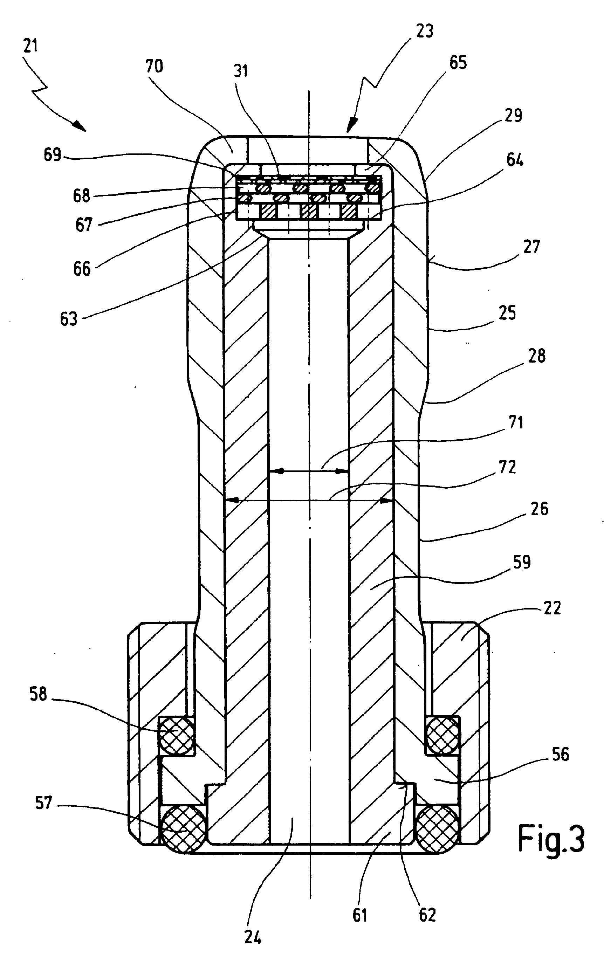

In Fig. 3 ist in einem schematischen Längsschnitt das Kühlmittelrohr 21 aus Fig. 2 dargestellt.

An seinem unteren, von der Einlaßöffnung 23 abgelegenen Ende weist das Kühlmittelrohr 21 einen Flansch 56 auf, über den es unter Zwischenlage von Dichtringen 57 und 58 mittels der ein Außengewinde aufweisenden Überwurfmutter 22 an dem Halter 10 verschraubt wird.

In dem Kühlmittelrohr 21 ist ein dieses längs durchsetzendes Einsatzrohr 59 aus Messing angeordnet, das an seinem unteren Ende einen Flansch 61 aufweist, der im montierten Zustand in Anlage mit einer Schulter 62 innen im Kühlmittelrohr 21 liegt. Auf diese Weise wird beim Verschrauben der Überwurfmutter 22 mit dem Halter 10 das Einsatzrohr 59 mit verschraubt.

Der aus Fig. 1 bekannte Kühlmittelkanal 24 erstreckt sich zentrisch innen in dem Einsatzrohr 59 und geht an dessen oberen Ende unter Ausbildung eines Trichters 63 in eine Schulter 64 über. An seiner Spitze 65 ist das Einsatzrohr 59 so umgebördelt, daß die Abdeckung 31 zwischen der Schulter 64 sowie der umgebördelten Spitze 65 eingeklemmt und somit festgelegt ist.

In dem gezeigten Ausführungsbeispiel umfaßt die Abdeckung 31 zunächst ein Sieb 66 in Form eines groben Lochbleches, das unmittelbar auf der Schulter 64 aufliegt. An das Lochblech 66 schließen sich zwei Siebe 67, 68 mit mittlerer Maschenweite an, bevor dann außenliegend ein feines Sieb 69 aufgelegt ist, das dem Rückhalt der Späne dient.

Auf diese Weise wird von außen nach innen gesehen ein feineres Sieb immer durch ein gröberes Sieb unterstützt, so daß sich das feinere Sieb nicht nach innen durchbiegen kann. Sollte sich wider Erwarten ein so großer Kühlmitteldruck ergeben, daß die Abdeckung 31 insgesamt leicht nach innen gedrückt wird, so wird sie durch den Trichter 63 endgültig unterstützt und abgefangen.

Im Bereich der konischen Spitze 29 ist das Kühlmittelrohr 21 darüber hinaus mit einem nach innen vorspringenden Rand 70 versehen, an den sich das Einsatzrohr 59 anlegt.

Der Kühlmittelkanal 24 weist einen bei 71 angedeuteten Durchmesser auf, der wegen der Wandstärke des Einsatzrohres 59 deutlich geringer ist als ein bei 72 angedeuteter Außendurchmesser des Einsatzrohres 59, der dem Durchmesser des Kühlmittelkanales im Stand der Technik entspricht.

Trotz des deutlich verringerten Durchmessers 71 des Kühlmittelkanales 24 ist gewährleistet, daß die erforderliche Menge an Kühlmittel durch das Kühlmittelrohr 21 hindurch in den Halter 10 und von dort in Werkzeuge 17 gelangen kann.

Durch Lösen der Überwurfmutter 22 kann das Kühlmittelrohr 21 problemlos von dem Halter 10 entfernt werden. Bei abgeschraubtem Kühlmittelrohr 21 läßt sich das Einsatzrohr 59 sozusagen nach hinten, also an der von der Spitze 29 abgelegenen Seite aus dem Kühlmittelrohr 21 herausziehen und durch ein neues ersetzen, falls die Abdeckung 31 verstopft oder sonstwie unbrauchbar geworden ist.

## Patentansprüche

1. Kühlmittelrohr für einen Halter (10) für ein Werkzeug (17), wobei der Halter (10) einen eine obere Öffnung (13) aufweisenden Kegel-Hohlschaft (12) zum Einspannen in eine Werkzeugaufnahme (43) aufweist und im Inneren (18) des Kegel-Hohlschaftes (12) das Kühlmittelrohr (21) zur Zufuhr von Kühlmittel zu dem Werkzeug (17) angeordnet wird, wobei das Kühlmittelrohr (21) eine der oberen Öffnung (13) zugewandte Einlaßöffnung (23) für Kühlmittel sowie einen, eine spitze (29) aufweisenden, oberen Rohrabschnitt (25) aufweist, der bei in die Werkzeugaufnahme (43) eingespanntem Halter (10) in ein das Kühlmittelrohr (21) dann zumindest teilweise übergreifendes Zufuhrrohr (54) für Kühlmittel hineinragt, wobei eine von einem Einsatz gehaltene Abdeckung (31) für die Einlaßöffnung (23) vorgesehen ist, die verhindert, daß Späne in das Kühlmittelrohr (21) hineingelangen,
**dadurch gekennzeichnet, daß** der Einsatz ein austauschbares Einsatzrohr (59) ist, das das Kühlmittelrohr (21) von der Abdeckung (31) bis zu dem Ende des Kühlmittelrohres (21) durchsetzt, das von dessen Spitze (29) abgelegen ist.

2. Kühlmittelrohr nach Anspruch 1, **dadurch gekennzeichnet, daß** es an seiner Spitze (29) einen nach innen vorspringenden Rand (70) aufweist.

3. Kühlmittelrohr nach Anspruch 1 oder 2, **dadurch gekennzeichnet, daß** die Abdeckung (31) an dem Einsatzrohr (59) festgelegt ist.

4. Kühlmittelrohr nach Anspruch 1 oder 2, **dadurch gekennzeichnet, daß** die Abdeckung (31) zumindest ein Sieb (66-69) umfaßt.

5. Kühlmittelrohr nach Anspruch 3, **dadurch gekennzeichnet, daß** das Einsatzrohr (59) einen zentrischen Kühlmittelkanal (24) aufweist, dessen Innendurchmesser (71) sich im Bereich der Einlaßöffnung (23) unter Ausbildung einer Schulter (64) stufenartig erweitert, wobei das Sieb (66) auf der Schulter (64) aufliegt.

6. Kühlmittelrohr nach einem der Ansprüche 1 bis 5, **dadurch gekennzeichnet, daß** das Einsatzrohr (59) aus einem weicheren Metall als das Kühlmittelrohr (21), vorzugsweise aus Messing hergestellt ist.

7. Kühlmittelrohr nach einem der Ansprüche 1 bis 6, **dadurch gekennzeichnet, daß** das Einsatzrohr (59) an seiner Spitze (65) umgebördelt ist und die Abdeckung (31) zwischen der umgebördelten Spitze (65) und einer Schulter (64) eines das Einsatzrohr (59) zentrisch durchsetzenden Kühlmittelkanals (24) eingeklemmt ist.

8. Kühlmittelrohr nach einem der Ansprüche 1 bis 7, **dadurch gekennzeichnet, daß** das Kühlmittelrohr (21) an seinem unteren Ende einen Flansch (56) aufweist, über den es mittels einer Überwurfmutter (22) mit Außengewinde an dem Halter (10) festgeschraubt ist.

9. Kühlmittelrohr nach Anspruch 8, **dadurch gekennzeichnet, daß** das Einsatzrohr (59) an seinem von der Einlaßöffnung (23) abgelegenen Ende einen Flansch (61) aufweist, über den es zwischen den Flansch (56) des Kühlmittelrohres (21) und den Halter (10) eingeklemmt ist.

10. Kühlmittelrohr nach einem der Ansprüche 3 bis 8, **dadurch gekennzeichnet, daß** auf dem Sieb (66) ein weiteres Sieb (67) mit geringerer Maschenweite aufliegt.

11. Halter für ein Werkzeug (17), mit einem eine obere Öffnung (13) aufweisenden Kegel-Hohlschaft (12) zum Einspannen in eine Werkzeugaufnahme (43) und einem im Inneren (18) des Kegel-Hohlschaftes (12) angeordneten Kühlmittelrohr (21) zur Zufuhr von Kühlmittel zu dem Werkzeug (17),
**dadurch gekennzeichnet, daß** das Kühlmittelrohr (21) ein Kühlmittelrohr (21) nach einem der Ansprüche 1 bis 10 ist.

## Claims

1. Coolant tube for a holder (10) for a tool (17), said holder (10) having a tapered hollow shaft (12) with an upper opening (13) for clamping into a tool receptacle (43), wherein the coolant tube is arranged in the interior (18) of the tapered hollow shaft (12) for supply of coolants to the tool (17), whereby the coolant tube (21) has an inlet opening (23) for coolants, said inlet opening facing the upper opening (13), as well as an upper tube section (25) having a top (29), said upper tube section, when the holder (10) is clamped into the tool receptacle (43), projects into a supply tube (54) for coolants, said supply tube overlapping the coolant tube (21) at least partially, whereby a covering (31) is provided for said inlet opening (23), which prevents chips from entering into the coolant tube, said covering being hold by said insert,
**characterized in that** said insert is an exchangeable insert tube (59) running through the coolant tube (21) from the covering (31) to the end of the coolant tube (21), which end is facing away from the top (29).

2. The coolant tube of claim 1, **characterized in that** it has on its top (29) a rim (70) which protrudes to the inner side.

3. The coolant tube of claim 1 or claim 2, **characterized in that** the covering (31) is fixed to the insert tube (59).

4. The coolant tube of claim 1 or claim 2, **characterized in that** the covering (31) comprises at least one sieve (66-69).

5. The coolant tube of claim 3, **characterized in that** the insert tube (59) comprises a centric coolant conduit (24), the inner diameter (71) thereof widens step-like in the area of the inlet opening (23), while forming a shoulder (64), whereby the sieve (66) rests on the shoulder (64).

6. The coolant tube of anyone of claims 1 through 5, **characterized in that** the insert tube (59) is manufactured from a softer metal then the coolant tube (21), preferably of brass.

7. The coolant tube of anyone of claims 1 through 6, **characterized in that** the insert tube (59) is flanged at its top (65) and the covering (31) is jammed between the flanged top (65) and a shoulder (64) of a coolant conduit (24) running centrically through said insert tube (59).

8. The coolant tube of anyone of claims 1 through 7, **characterized in that** the coolant tube (21) comprises a flange (56) on its lower end, by means of which it is screwed by means of a coupling nut (22) with external thread to the holder (10).

9. The coolant tube of claim 8, **characterized in that** the insert tube (59) comprises a flange (61) at its end remote from the inlet opening (23), by means of which flange it is clamped between the flange (56) of the coolant tube (21) and the holder (10).

10. The coolant tube of anyone of claims 3 through 8, **characterized in that** there is supported on the sieve (66) a further sieve (67) with a finer mesh size.

11. A holder for a tool (17), having a tapered hollow shaft (12) with an upper opening (13) for clamping into a tool receptacle (43), and a coolant tube (21) arranged within said hollow tapered shaft (12) for supply of coolants to the tool (17),
**characterized in that** the coolant tube (21) is a coolant tube (21) according to anyone of claims 1 through 10.

## Revendications

1. Conduit pour agent de refroidissement pour un support (10) d'un outil (17), le support (10) présentant un corps creux conique (12) présentant une ouverture (13) supérieure pour le serrage dans un logement d'outil (43) et le conduit pour agent de refroidissement (21) étant disposé à l'intérieur (18) du corps creux conique (12) pour l'amenée d'agent de refroidissement à l'outil (17), le conduit pour agent de refroidissement (21) présentant une ouverture d'admission (23) tournée vers l'ouverture (13) supérieure pour agent de refroidissement ainsi qu'un tronçon de tube (25) supérieur, présentant une pointe (29), qui pénètre lorsque le support (10) est serré dans le logement d'outil (43) dans un conduit d'alimentation (54) pour agent de refroidissement recouvrant alors au moins en partie le conduit pour agent de refroidissement (21), un recouvrement (31) maintenu par un insert pour l'ouverture d'admission (23) étant prévu, lequel empêche que des copeaux ne parviennent dans le conduit pour agent de refroidissement (21),
**caractérisé en ce que** l'insert est un conduit d'insertion (59) interchangeable qui traverse le conduit pour agent de refroidissement (21) depuis le recouvrement (31) jusqu'à l'extrémité du conduit pour agent de refroidissement (21), qui est éloignée de sa pointe (29).

2. Conduit pour agent de refroidissement selon la revendication 1, **caractérisé en ce qu'**il présente sur sa pointe (29) un bord (70) saillant vers l'intérieur.

3. Conduit pour agent de refroidissement selon la revendication 1 ou 2, **caractérisé en ce que** le recouvrement (31) est fixé sur le conduit d'insertion (59).

4. Conduit pour agent de refroidissement selon la revendication 1 ou 2, **caractérisé en ce que** le recouvrement (31) comporte au moins un tamis (66-69).

5. Conduit pour agent de refroidissement selon la revendication 3, **caractérisé en ce que** le conduit d'insertion (59) présente un canal central pour agent de refroidissement (24), dont le diamètre intérieur (71) s'élargit de manière étagée dans la zone de l'ouverture d'admission (23) en réalisant un épaulement (64), le tamis (66) reposant sur l'épaulement (64).

6. Conduit pour agent de refroidissement selon l'une des revendications 1 à 5, **caractérisé en ce que** le conduit d'insertion (59) est fabriqué en un métal plus mou que le conduit pour agent de refroidissement (21), de préférence en laiton.

7. Conduit pour agent de refroidissement selon l'une des revendications 1 à 6, **caractérisé en ce que** le conduit d'insertion (59) est rabattu sur sa pointe (65) et le recouvrement (31) est serré entre la pointe (65) rabattue et un épaulement (64) d'un canal pour agent de refroidissement (24) traversant centralement le conduit d'insertion (59).

8. Conduit pour agent de refroidissement selon l'une des revendications 1 à 7, **caractérisé en ce que** le conduit pour agent de refroidissement (21) présente sur son extrémité inférieure une bride (56), par le biais de laquelle il est vissé à fond sur le support (10) au moyen d'un écrou-raccord (22) doté d'un filetage extérieur.

9. Conduit pour agent de refroidissement selon la revendication 8, **caractérisé en ce que** le tube d'insertion (59) présente sur son extrémité éloignée de l'ouverture d'admission (23) une bride (61), par le biais de laquelle il est serré entre la bride (56) du conduit pour agent de refroidissement (21) et le support (10).

10. Conduit pour agent de refroidissement selon l'une des revendications 3 à 8, **caractérisé en ce qu'**un autre tamis (67) avec une ouverture de mouille plus petite repose sur le tamis (66).

11. Support d'un outil (17), avec un corps creux conique (12) présentant une ouverture (13) supérieure pour le serrage dans un logement d'outil (43) et un conduit pour agent de refroidissement (21) disposé à l'intérieur (18) du corps creux conique (12) pour l'amenée d'agent de refroidissement à l'outil (17),
**caractérisé en ce que** le conduit pour agent de refroidissement (21) est un conduit pour agent de refroidissement (21) selon l'une des revendications 1 à 10.
